# DEMANDE DE BREVET EUROPEEN

(11) **EP 1 972 859 A2**
(43) Date de publication de la demande: **24.09.2008**
(21) Numéro de dépôt: 08360006.4
(22) Date de dépôt: 25.03.2008
(51) Int. Cl.: F24D 11/00, F24D 13/04

(54) **Installation de chauffage central hybride et procèdè de commande d'une telle installation**

(30) Priorité: 23.03.2007 FR 0754007
(71) Demandeur: Société Financière Yves Judel, 67720 Hoerdt (FR); Galmes, Alain, 84510 Caumont sur Durance (FR)
(72) Inventeur: Galmes Alain, 84510 Caumont Sur Durance (FR); Judel Yves, 67116 Reichstett (FR)
(74) Mandataire: Nuss, Laurent

(57) **Abrégé**

La présente invention a pour objet une installation de chauffage central hybride et un procédé de commande d'une telle installation.

Une telle installation comprend essentiellement au moins un circuit de circulation, un dispositif de chauffage à énergie renouvelable, au moins un radiateur à éléments échangeurs de chaleur, des moyens assurant et contrôlant la circulation de fluide caloporteur et un réservoir tampon.

Cette installation est caractérisée en ce que chaque élément échangeur de chaleur (5) consiste en un élément de radiateur à alimentation en énergie calorique mixte et est constitué par un corps creux en communication avec le circuit (2) de circulation de fluide caloporteur et par un organe chauffant électrique, monté avec contact surfacique intime sur une face extérieure du corps creux et éventuellement commun à un groupement (5') d'éléments (5), et en ce qu'à chaque élément échangeur (5), à chaque groupement (5') ou à chaque local ou pièce à chauffer est associé un organe (14) de mesure de la température locale, commandant le fonctionnement dudit ou desdits organe(s) chauffant(s) électrique(s).

## Description

La présente invention concerne le domaine du chauffage des immeubles, maisons et appartements, et a pour objet une installation de chauffage central hybride et un procédé de commande d'une telle installation.

Durant ces dernières années, l'utilisation d'énergies renouvelables ou écologiques s'est largement répandue dans la plupart des secteurs et des domaines techniques, notamment ceux à forte consommation énergétique, ce pour des raisons à la fois économiques et écologiques.

Tel est notamment le cas pour le domaine du chauffage industriel, commercial et surtout domestique.

En effet, les installations de chauffage utilisant des énergies renouvelables se développent actuellement à grande échelle, tant au niveau du remplacement de systèmes existants obsolètes ou en panne, que des nouvelles réalisations en termes de constructions, ce développement étant en outre favorisé par les pouvoirs publics par des subventions ou autres aides financières.

Une telle installation de chauffage comprend généralement un circuit de circulation de fluide caloporteur, préférentiellement à déperdition calorique limitée, au moins un dispositif de chauffage à énergie renouvelable, notamment sous la forme d'un arrangement de capteur(s) solaire(s) thermique(s), au moins un élément ou groupement d'au moins deux éléments échangeur(s) de chaleur disposé, le cas échéant chacun, dans un(e) local ou pièce à chauffer et des moyens assurant et contrôlant la circulation du fluide caloporteur dans le circuit précité reliant ledit au moins un dispositif de chauffage et ledit au moins un élément ou groupement d'éléments échangeur(s) de chaleur.

Pour lisser, emmagasiner et faire perdurer les apports de calories fournis par le dispositif de chauffage à énergie renouvelable (géothermie, pompe à chaleur, énergie éolienne, énergie solaire, ...), ces installations intègrent généralement aussi au moins un réservoir tampon thermiquement isolé et en communication fluidique contrôlée avec lesdits dispositifs de chauffage et élément(s) échangeur(s) de chaleur, par l'intermédiaire du circuit de circulation.

Toutefois, un tel dispositif de chauffage à énergie renouvelable n'est, dans la plupart des cas, en particulier dans les zones tempérées, pas suffisant pour assurer l'apport en calories nécessaire tout au long de l'année, ou même sur une journée complète, pour la demande en chauffage d'un appartement, d'une maison, et a fortiori d'un immeuble.

On est de ce fait obligé d'associer aux installations précitées soit un dispositif de chauffage central traditionnel (gaz, fioul, bois, ...), soit un second ou même un deuxième et un troisième dispositif(s) de chauffage à énergie renouvelable.

Cette nécessité d'un dispositif de chauffage complémentaire résulte en un renchérissement important du coût de revient de l'installation totale, et en un doublement de l'encombrement, des travaux d'aménagement et de la maintenance, sans éventuellement permettre une régulation fine en température par local ou pièce, ou même partie de local ou de pièce.

La présente invention a pour but de permettre de surmonter les inconvénients et limitations mentionnés ci-dessus.

A cet effet, elle a pour principal objet une installation de chauffage central hybride pour immeuble à usage domestique, commercial ou industriel, comprenant essentiellement :
- un circuit de circulation de fluide caloporteur, préférentiellement à déperdition calorique limitée,
- au moins un dispositif de chauffage à énergie renouvelable, notamment sous la forme d'un arrangement de capteur(s) solaire(s) thermique(s),
- au moins un élément ou groupement d'au moins deux éléments échangeur(s) de chaleur disposé, le cas échéant, chacun, dans un(e) local ou pièce à chauffer,
- des moyens assurant et contrôlant la circulation du fluide caloporteur dans le circuit précité reliant ledit au moins un dispositif de chauffage et ledit au moins un élément ou groupement d'éléments échangeur(s) de chaleur,
- au moins un réservoir tampon thermiquement isolé en communication fluidique contrôlée avec lesdits dispositifs de chauffage et élément(s) échangeur(s) de chaleur, par l'intermédiaire du circuit de circulation,
installation caractérisée en ce que chaque élément échangeur de chaleur consiste en un élément de radiateur à alimentation en énergie calorique mixte et est constitué par un corps creux en communication avec le circuit de circulation de fluide caloporteur et par un organe chauffant électrique, monté avec contact surfacique intime sur une face extérieure du corps creux et éventuellement commun à un groupement d'éléments, et en ce qu'à chaque élément échangeur, à chaque groupement ou à chaque local ou pièce à chauffer est associé un organe de mesure de la température locale, commandant le fonctionnement dudit ou desdits organe(s) chauffant(s) électrique(s).

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
les figures 1 et 2 sont des représentations schématiques de deux modes de réalisation d'une installation selon l'invention ;
la figure 3 est une vue en perspective d'un élément échangeur de chaleur selon une première variante de réalisation de l'invention ;
la figure 4 est une vue en perspective partielle, à une échelle différente et selon un autre angle, du corps creux et de l'élément chauffant électrique faisant partie de l'élément de la figure 3 ;
la figure 5 est une vue en coupe latérale d'un élément échangeur de chaleur selon une seconde variante de réalisation de l'invention ;
la figure 6 est une vue en perspective d'un groupement d'éléments selon la figure 3 ou 5 formant radiateur ;
la figure 7 est une vue de dessus d'une partie d'un arrangement de tubes faisant partie d'un panneau solaire pouvant former un dispositif de chauffage à énergie renouvelable faisant partie d'une installation selon l'une quelconque des figures 1 et 2 ;
la figure 8 est une vue en coupe selon A-A d'un tube plat de la figure 7 ;
la figure 9 est une vue en coupe partielle d'un arrangement de panneau solaire intégrant un tube plat selon l'une des figures 7 et 8 ;
la figure 10 est une vue en coupe transversale similaire à celle de la figure 8 d'une variante de réalisation d'un tube plat, et,
la figure 11 est une vue partielle en coupe longitudinale d'un tube plat au niveau de l'une de ses extrémités longitudinales.

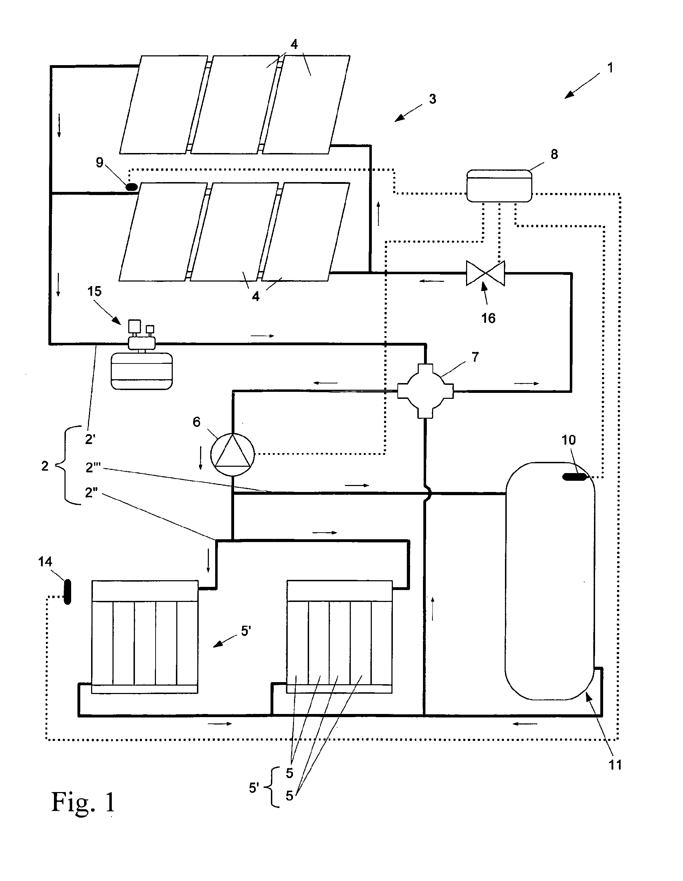

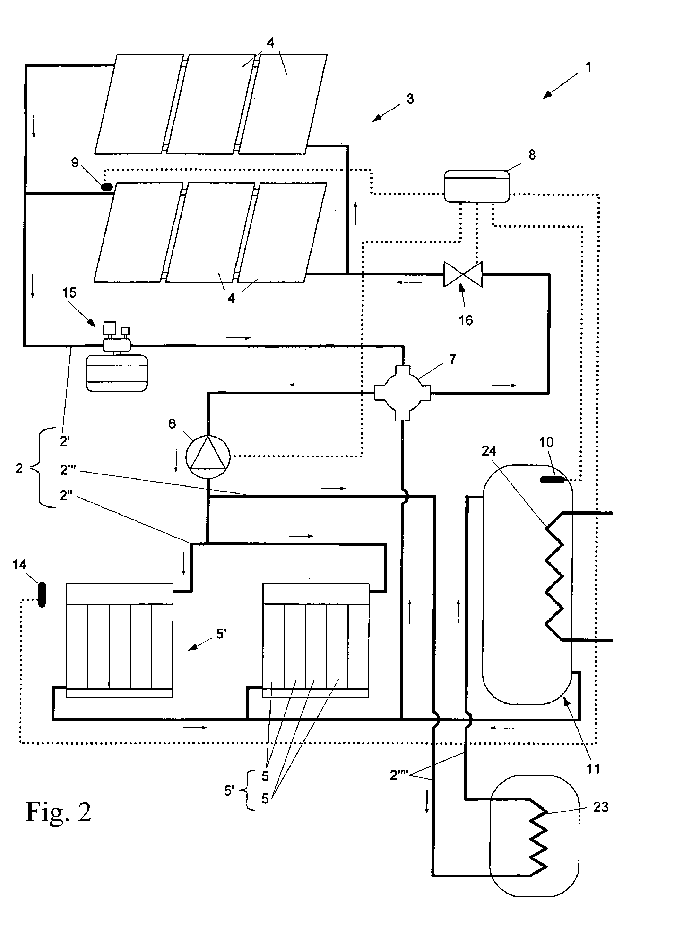

Les figures 1 et 2 montrent de manière schématique deux modes de réalisation d'une installation 1 de chauffage central hybride pour immeuble à usage domestique, commercial ou industriel.

Cette installation 1 comprend essentiellement :
- un circuit 2 ; 2', 2", 2'" de circulation de fluide caloporteur, préférentiellement à déperdition calorique limitée (c'est-à-dire formé de conduits isolés thermiquement),
- au moins un dispositif 3 de chauffage à énergie renouvelable, notamment sous la forme d'un arrangement de capteur(s) solaire(s) 4 thermique(s),
- au moins un élément 5 ou groupement 5' d'au moins deux éléments 5 échangeur(s) de chaleur disposé, le cas échéant, chacun, dans un(e) local ou pièce à chauffer,
- des moyens 6 à 10 assurant et contrôlant la circulation du fluide caloporteur dans le circuit 2 précité reliant ledit au moins un dispositif de chauffage 3 et ledit au moins un élément 5 ou groupement 5' d'éléments échangeur(s) de chaleur,
- au moins un réservoir tampon 11 thermiquement isolé et en communication fluidique contrôlée avec lesdits dispositifs de chauffage 3 et élément(s) 5 échangeur(s) de chaleur, par l'intermédiaire du circuit de circulation 2.

De manière connue, le circuit 2 intègre un groupe de sécurité 15 avec par exemple un vase d'expansion, un évent, une soupape de surpression et un robinet de mise à niveau.

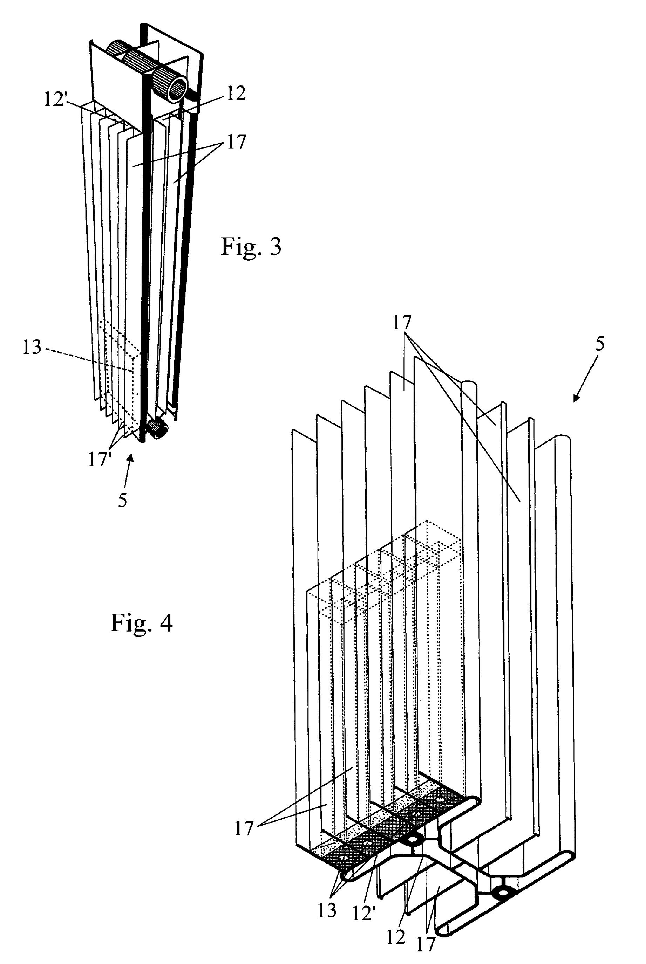

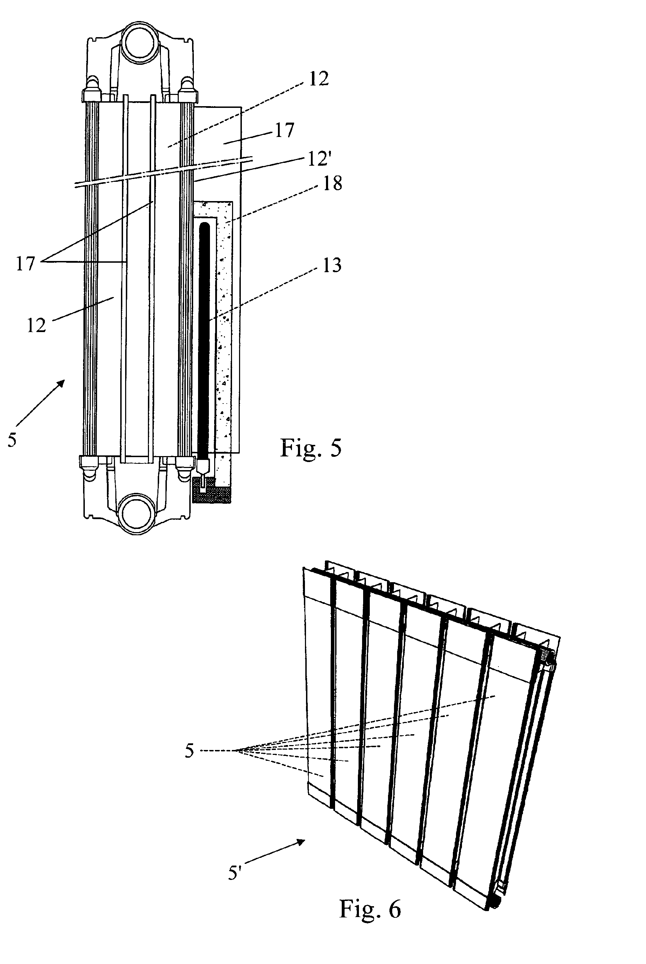

Conformément à l'invention, et comme cela ressort également des figures 3 à 6, chaque élément échangeur de chaleur 5 consiste en un élément de radiateur à alimentation en énergie calorique mixte et est constitué par un corps creux 12 en communication avec le circuit 2 de circulation de fluide caloporteur et par un organe chauffant électrique 13, monté avec contact surfacique intime sur une face extérieure 12' du corps creux 12 et éventuellement commun à un groupement 5' d'éléments 5. A chaque élément échangeur 5, à chaque groupement 5' ou à chaque local ou pièce à chauffer, selon le cas, est associé un organe 14 de mesure de la température locale, commandant le fonctionnement dudit ou desdits organe(s) chauffant(s) électrique(s) 13.

Ainsi, l'invention permet d'exploiter au maximum et de manière optimale (en fonction de la demande et de la disponibilité) l'énergie calorique fournie par le dispositif 3, tout en garantissant un chauffage suffisant et une température de confort prédéfinie dans chaque local ou pièce. Cette solution conduit à un chauffage économique, écologique et flexible, la température de chaque pièce ou local pouvant être réglée de manière individuelle et précise.

En outre, en chauffant avec les éléments chauffants électriques 13 le corps creux 12 de l'élément de radiateur 5 et donc le volume de fluide caloporteur contenu dans ce dernier, il est possible de limiter l'apport énergétique électrique au seul différentiel de température du fluide qui manque pour assurer la température de confort souhaitée ou programmée.

De plus, en utilisant les éléments chauffants électriques 13 pour chauffer le fluide caloporteur, on conserve le même mode de chauffage doux et sans à-coups, on peut utiliser avantageusement la propriété d'accumulation thermique massique des éléments de radiateur 5 à fluide et, enfin, lesdits éléments chauffants électriques peuvent être montés en face arrière des éléments 5, de manière cachée (conservation de l'aspect usuel des radiateurs à eau et non accessibilité de la partie électrique).

Par ailleurs, le chauffage complémentaire local fourni par les éléments chauffants 13 ne nécessite pas de travaux importants, aucun dispositif de chauffage additionnel encombrant et permet de chauffer de manière ciblée, uniquement à l'endroit de la demande.

Comme cela ressort des figures 1 et 2, le circuit 2 est, de manière avantageuse, sensiblement composé de trois portions de circuit 2', 2", 2'" bouclées respectivement sur le dispositif 3 de chauffage à énergie renouvelable, sur le ou les éléments 5 ou groupement(s) 5' d'éléments échangeur(s) de chaleur et sur le réservoir tampon 11. Les trois portions de circuit précitées 2', 2", 2'" sont au moins en partie reliées entre elles par un noeud multivoies 7, comportant au moins trois voies de mixage/distribution et la circulation de fluide caloporteur dans les différentes portions de circuit 2', 2", 2'" est commandée en fonction des valeurs de la température dudit fluide mesurée au niveau de la sortie du dispositif 3 de chauffage à énergie renouvelable et dans le réservoir tampon 11, en contrôlant au moins un organe 6 de mise en circulation forcée du fluide, au moins un organe 16 de régulation du débit de fluide caloporteur dans au moins une portion de circuit 2' et/ou au moins une voie au niveau du noeud multivoies 7.

Le noeud 7 peut, par exemple, consister en une vanne manuelle à trois ou quatre voies, dont la position, et donc les degrés d'ouverture des différentes voies, est avantageusement réglée au moment de la mise en service de l'installation, éventuellement après une période de calibrage.

Préférentiellement, la circulation du fluide caloporteur dans le circuit 2 est commandée par un organe de contrôle 8 du type thermostat différentiel, associé à des capteurs de température 9, 10 montés respectivement au niveau du dispositif de chauffage à énergie renouvelable 3 et au niveau du réservoir tampon 11.

Cet organe de contrôle 8 est programmé ou réglé pour, d'une part, autoriser une circulation du fluide à travers le dispositif 3 de chauffage à énergie renouvelable uniquement lorsqu'un premier capteur de température 9 associé à ce dispositif 3 mesure une valeur supérieure à une première valeur seuil préréglée, par exemple 40 °C, d'autre part, autoriser une circulation du fluide dans les portions de circuit 2" et 2'" comprenant le réservoir tampon 11 et ledit au moins un élément 5 ou groupement 5' d'éléments échangeurs de chaleur lorsqu'un deuxième capteur de température 10 associé au réservoir tampon 11 mesure une valeur supérieure à une valeur seuil préréglée, par exemple 40 °C, et que simultanément le premier capteur 9 mesure une valeur inférieure ou égale à la première valeur seuil préréglée et, enfin, arrêter ou interdire toute circulation de fluide dans le circuit 2 lorsque les deux capteurs précités 9 et 10 mesurent des valeurs inférieures ou égales à leur valeurs seuil respectives.

L'organe 14 de mesure de la température locale peut être unique ou non pour chaque pièce ou local à chauffer, être ou non associé à un groupement 5' d'éléments 5 et être ou non relié à l'organe de contrôle 8, ce en fonction de la solution constructive pratique et du mode de fonctionnement de l'installation 1.

Afin d'autoriser une accumulation anticipative de chaleur en l'absence de demande de chauffage, il peut être prévu que la circulation de fluide caloporteur soit limitée, par les moyens 6 à 8 et 16 assurant et contrôlant sa circulation, aux portions de circuit 2' et 2'" associées au dispositif 3 de chauffage à énergie renouvelable et au réservoir tampon 11, lorsque la température locale mesurée au niveau dudit au moins un élément 5 ou groupement 5' d'éléments échangeur(s) de chaleur est supérieure à une valeur seuil supérieure ou de consigne préréglée, éventuellement ajustable par l'utilisateur.

En vue d'augmenter la polyvalence de l'installation et de fournir l'ensemble des services généralement liés à la fonction chauffage, le circuit 2 de circulation peut comporter une portion en dérivation 2"" alimentant un serpentin 23 situé dans un ballon alimentant un circuit de distribution d'eau chaude (figure 2).

En variante, un serpentin 24 faisant partie d'un circuit de distribution d'eau chaude peut être monté dans le réservoir tampon 11 (figure 2).

Selon un mode de réalisation pratique préféré de l'invention, ressortant des figures 3 à 6, les éléments 5 échangeurs de chaleur sont regroupés en radiateurs 5' d'au moins deux éléments reliés entre eux en parties haute et basse, chaque corps creux 12 présentant une structure profilée creuse à section en forme de I, de II, de III ou annulaire, de manière à former des cheminées de convection entre et/ou dans lesdits éléments 5, ces derniers étant munis d'ailettes longitudinales 17 montées ou formées intégralement au niveau de leurs faces latérales non apparentes, l'organe chauffant électrique 13, éventuellement commun à tous les éléments 5 d'un groupement 5', étant soit également pourvu d'ailettes 17' de dissipation calorique sur sa (ses) face(s) qui ne sont pas en contact avec le corps creux 12 de l'élément 5 associé, soit isolé thermiquement par rapport à l'extérieur au niveau de cette ou ces face(s) (enveloppe recouvrante isolante 18).

Les différents constituants ou parties constitutives de l'élément 13 peuvent également être monté(e)s entre les ailettes 17 des corps creux 12 et s'étendent sur une hauteur de ce dernier qui est fonction de la puissance de chauffage électrique souhaitée pour l'élément 5.

Un radiateur 5' de ce type est notamment divulgué par le brevet français n° 2 824 386 (n° de dépôt 01 05947). Toutefois, les corps creux 12 des éléments 5 pourront également faire état en variante d'une construction telle que connue par le document FR-2 771 482 ou FR-2 719 894.

En accord avec une caractéristique préférée de l'invention, représentée à titre d'exemple sur les figures 1, 2 et 7 à 10, le dispositif 3 de chauffage à énergie renouvelable consiste en au moins une unité de panneau ou capteur solaire 4, comprenant chacun des tubes plats 4' parallèles et profilés, de faible épaisseur et à grande surface exposée, reliés fluidiquement entre eux et éventuellement compartimentés chacun en plusieurs canaux longitudinaux 4" de circulation de fluide caloporteur, ces derniers étant le cas échéant pourvus d'ailettes ou de nervures échangeuses 4"' internes et/ou externes profilées dans la direction longitudinale desdits canaux 4" et tubes 4'.

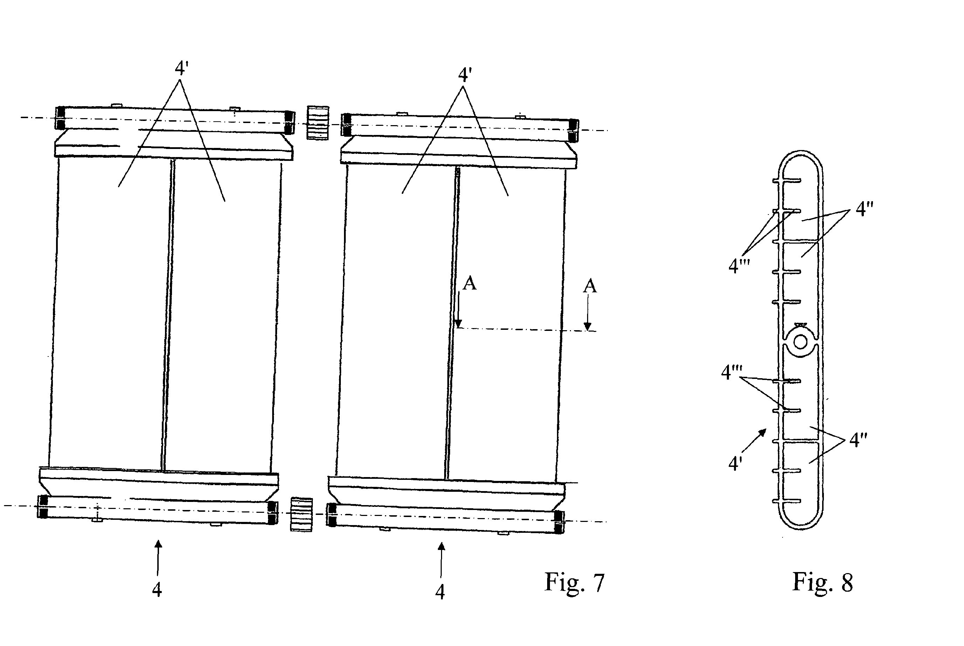

Les figures 7 à 9 illustrent une première variante de réalisation des tubes plats 4' sous la forme de tubes à section oblongue, munies d'ailettes 4"' externes et internes, mutuellement en regard et situées sur les faces opposées de la grande paroi des tubes 4' exposées au rayonnement solaire.

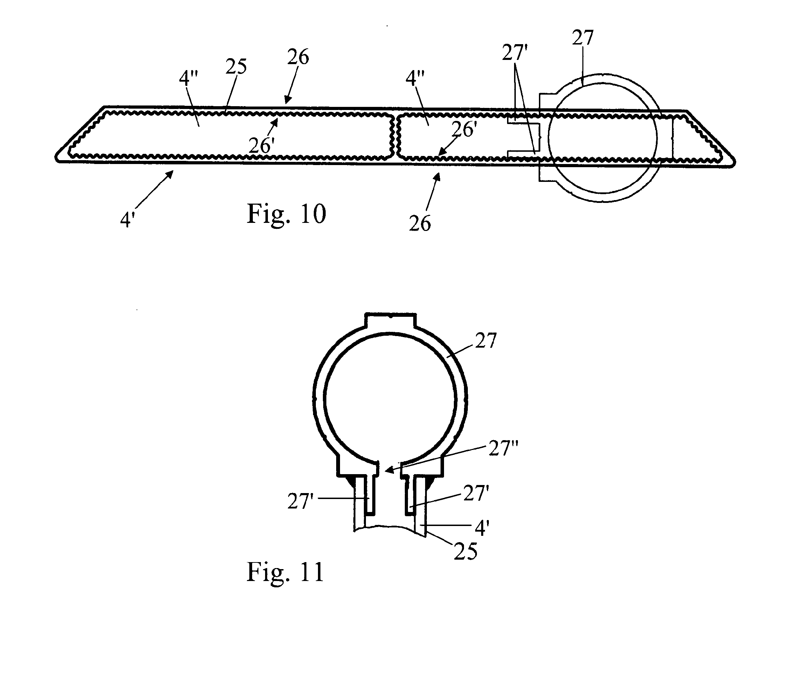

Les figures 10 et 11 illustrent une seconde variante de réalisation des tubes plats 4' constituant chaque unité de panneau solaire 4, dans laquelle la paroi latérale 25 de chacun de ces tubes 4' présente en section transversale une forme en trapèze aplati avec une face extérieure 26 lisse et une face intérieure 26' nervurée dans la direction d'extension longitudinale du tube profilé 4' considéré, lesdits tubes plats 4' étant pourvus à chacune de leurs extrémités longitudinales d'un tube collecteur 27 formant l'extrémité concernée, pourvu d'ailettes 27' engagées par emboîtement ajusté dans lesdits tubes plats 4' et d'ouvertures 27" de communication avec le volume intérieur de ces derniers.

Comme le montre la figure 11, les tubes plats et collecteurs sont avantageusement solidarisés entre eux par soudage ou collage et réalisés dans le même matériau métallique.

Préférentiellement, la soudure se fait avec un métal d'apport identique ou à propriétés de dilatation thermique identique à celui formant les tubes plats et collecteurs.

Le motif nervuré ou strié (préférentiellement en dents de scie à pointes arrondies) homogène sur la totalité de la face interne 26' de la paroi 25 permet d'augmenter la surface d'échange entre cette dernière et le fluide et la forme en trapèze régulier ou symétrique autorise une adjacence rapprochée de deux tubes 4' côte à côte, avec une perte de surface non utile limitée, ainsi qu'un montage plus aisé des tubes collecteurs, en particulier en ce qui concerne la réalisation de l'étanchéité latérale avec les tubes plats.

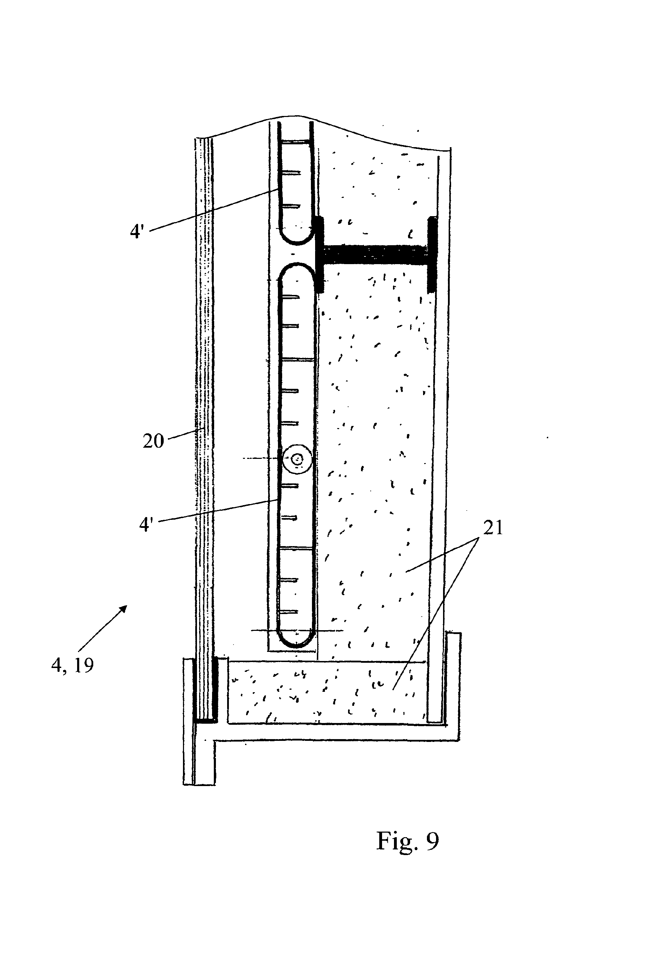

Ces tubes plats 4', préférentiellement peints ou galvanisés en noir, sont, par exemple, comme le montre la figure 9 en relation avec la première variante précitée, montés à plusieurs dans des caissons 19 vitrés et isolés, avec une face exposée transparente, fermée par un vitrage 20 avec un indice de transmission maximal et un indice de réflexion minimal (dans la direction extérieur/intérieur), et des parois latérales et arrière isolées, par exemple recouvertes d'une couche isolante 21.

De plus, le fluide caloporteur est avantageusement de l'eau, préférentiellement de l'eau additionnée de glycol (en quantité suffisante pour éviter le gel pendant les périodes hivernales).

Un tel panneau solaire mettant en oeuvre la première variante de réalisation des tubes plats est notamment connu de la demande de brevet français n° 07 00268 du 12 janvier 2007 et de la demande de brevet français n° 07 53996 déposée le 23 mars 2007.

Néanmoins, d'autres constructions, ou réalisations de natures différentes, pour le dispositif 3 sont possibles, ainsi que son association avec un second dispositif de chauffage à énergie renouvelable tel qu'évoqué au début, préférentiellement complémentaire en termes d'efficacité, pour l'apport calorique durant la journée ou sur l'année, par rapport au dispositif 3.

L'installation de chauffage 1 selon l'invention peut être intégrée dans le cadre ou faire partie d'une réalisation immobilière neuve, soit venir en remplacement d'une installation existante dans un contexte de rénovation, ou encore se greffer sur une installation existante dans le cadre d'une amélioration de cette dernière, par exemple pour réaliser des économies d'énergie et/ou en accord avec des considérations écologiques.

Ainsi, l'installation 1 fonctionne primairement à base d'énergie renouvelable et ne bascule en mode chauffage électrique qu'en cas de nécessité, pour faire l'appoint en température lorsque le différentiel entre la demande locale en chauffage et les possibilités de fourniture de calories du dispositif de chauffage 3 et du réservoir 11 tend vers zéro ou devient négatif.

Lorsque l'installation de chauffage 1 vient se greffer sur une installation de chauffage traditionnel, avec substitution complète ou partielle des radiateurs existants par des radiateurs mixtes 5' selon l'invention, ou que l'installation de chauffage 1 est complétée (lors de sa réalisation) par un dispositif de chauffage traditionnel (gaz, fioul, bois, ...), l'ensemble résultant pourra basculer entre trois modes de fonctionnement : à énergie renouvelable, à énergie traditionnelle (fossile) et à énergie électrique (chauffage local).

Un tel dispositif de chauffage traditionnel permet notamment de garantir une continuité en approvisionnement en eau chaude.

Dans une telle installation à trois modes de fonctionnement, l'organe 8 consistera avantageusement en une unité informatique programmable, apte à gérer de manière optimale les différentes énergies en fonction de la pluralité de paramètres à prendre en compte.

L'invention concerne également un procédé de commande ou de pilotage d'une installation de chauffage 1 telle que décrite précédemment et représentée sur les figures 1 et 2 annexées.

Ce procédé consiste essentiellement, en cas de demande de chauffage, dans au moins un local ou une pièce recevant au moins un élément échangeur de chaleur 5 ou au moins un groupement 5' de tels éléments, à autoriser une circulation du fluide caloporteur à travers la totalité du circuit 2 lorsque la température relevée à la sortie du dispositif 3 de chauffage à énergie renouvelable est supérieure à une première valeur seuil inférieure préréglée, par exemple 40 °C, à arrêter la circulation de fluide caloporteur à travers le dispositif 3 de chauffage à énergie renouvelable et à autoriser une circulation limitée entre le réservoir tampon 11 et les éléments 5 échangeurs de chaleur lorsque la température relevée à la sortie du dispositif 3 de chauffage à énergie renouvelable est inférieure ou égale à la première valeur seuil inférieure et que la température relevée dans le réservoir tampon 11 est supérieure à une seconde valeur seuil inférieure, par exemple 40 °C, et, enfin, à arrêter toute circulation forcée de fluide caloporteur dans le circuit de circulation 2 lorsque les deux températures relevées précitées sont inférieures ou égales aux valeurs seuil inférieures respectives et à alimenter l'organe ou les organes chauffant(s) électrique(s) 13 du ou des groupement(s) 5' d'éléments 5 échangeurs de chaleur pendant une durée ou des périodes, et le cas échéant avec une intensité, fonction du différentiel de température entre, d'une part, la valeur mesurée par l'organe 14 de mesure de la température locale associé à chaque groupement 5' ou à chaque local ou pièce recevant au moins un tel groupement 5' et, d'autre part, une valeur de consigne de température fixée pour ledit ou chaque groupement 5' ou pour ledit local ou ladite pièce considéré(e).

Il peut aussi être prévu d'arrêter la circulation de fluide caloporteur à travers les ou certains des éléments 5 ou groupements 5' d'éléments échangeurs de chaleur et à autoriser une circulation limitée entre le dispositif 3 de chauffage à énergie renouvelable et le réservoir tampon 11, lorsque la température locale mesurée au niveau des ou du groupement(s) 5' d'éléments 5 échangeurs de chaleur considéré(s) est supérieure à une valeur seuil supérieure ou de consigné préréglée, éventuellement ajustée par l'utilisateur.

L'organe de contrôle 8 peut présenter des possibilités de programmation plus ou moins élaborées en fonction de la flexibilité souhaitée par l'utilisateur et de la complexité des composants à piloter.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Installation de chauffage central hybride pour immeuble à usage domestique, commercial ou industriel, comprenant essentiellement :
- un circuit de circulation de fluide caloporteur, préférentiellement à déperdition calorique limitée,
- au moins un dispositif de chauffage à énergie renouvelable, notamment sous la forme d'un arrangement de capteur(s) solaire(s) thermique(s),
- au moins un élément ou groupement d'au moins deux éléments échangeur(s) de chaleur disposé, le cas échéant, chacun, dans un(e) local ou pièce à chauffer,
- des moyens assurant et contrôlant la circulation du fluide caloporteur dans le circuit précité reliant ledit au moins un dispositif de chauffage et ledit au moins un élément ou groupement d'éléments échangeur(s) de chaleur,
- au moins un réservoir tampon thermiquement isolé en communication fluidique contrôlée avec lesdits dispositifs de chauffage et élément(s) échangeur(s) de chaleur, par l'intermédiaire du circuit de circulation,
installation (1) **caractérisée en ce que** chaque élément échangeur de chaleur (5) consiste en un élément de radiateur à alimentation en énergie calorique mixte et est constitué par un corps creux (12) en communication avec le circuit (2) de circulation de fluide caloporteur et par un organe chauffant électrique (13), monté avec contact surfacique intime sur une face extérieure (12') du corps creux (12) et éventuellement commun à un groupement (5') d'éléments (5), et **en ce qu'**à chaque élément échangeur (5), à chaque groupement (5') ou à chaque local ou pièce à chauffer est associé un organe (14) de mesure de la température locale, commandant le fonctionnement dudit ou desdits organe(s) chauffant(s) électrique(s) (13).

2. Installation selon la revendication 1, **caractérisée en ce que** le circuit de circulation (2) est sensiblement composé de trois portions de circuit (2', 2", 2"') bouclées respectivement sur le dispositif (3) de chauffage à énergie renouvelable, sur le ou les éléments (5) ou groupement(s) (5') d'éléments échangeur(s) de chaleur et sur le réservoir tampon (11), **en ce que** les trois portions de circuit précitées (2', 2", 2"') sont au moins en partie reliées entre elles par un noeud multivoies (7), comportant au moins trois voies de mixage/distribution et **en ce que** la circulation de fluide caloporteur dans les différentes portions de circuit (2', 2", 2"') est commandée en fonction des valeurs de la température dudit fluide mesurée au niveau de la sortie du dispositif (3) de chauffage à énergie renouvelable et dans le réservoir tampon (11), en contrôlant au moins un organe (6) de mise en circulation forcée du fluide, au moins un organe (16) de régulation du débit de fluide caloporteur dans au moins une portion de circuit (2') et/ou au moins une voie au niveau du noeud multivoies (7).

3. Installation selon la revendication 1 ou 2, **caractérisée en ce que** la circulation du fluide caloporteur dans le circuit (2) est commandée par un organe de contrôle (8) du type thermostat différentiel, associé à des capteurs de température (9, 10) montés respectivement au niveau du dispositif de chauffage à énergie renouvelable (3) et au niveau du réservoir tampon (11), ledit organe de contrôle (8) étant programmé ou réglé pour, d'une part, autoriser une circulation du fluide à travers le dispositif (3) de chauffage à énergie renouvelable uniquement lorsqu'un premier capteur de température (9) associé à ce dispositif (3) mesure une valeur supérieure à une première valeur seuil préréglée, par exemple 40 °C, d'autre part, autoriser une circulation du fluide dans les portions de circuit (2" et 2"') comprenant le réservoir tampon (11) et ledit au moins un élément (5) ou groupement (5') d'éléments échangeurs de chaleur lorsqu'un deuxième capteur de température (10) associé au réservoir tampon (11) mesure une valeur supérieure à une valeur seuil préréglée, par exemple 40 °C, et que simultanément le premier capteur (9) mesure une valeur inférieure ou égale à la première valeur seuil préréglée et, enfin, arrêter ou interdire toute circulation de fluide dans le circuit (2) lorsque les deux capteurs précités (9 et 10) mesurent des valeurs inférieures ou égales à leur valeurs seuil respectives.

4. Installation selon la revendication 3, **caractérisée en ce que** la circulation de fluide caloporteur est limitée, par les moyens (6 à 8 et 16) assurant et contrôlant sa circulation, aux portions de circuit (2' et 2"') associées au dispositif (3) de chauffage à énergie renouvelable et au réservoir tampon (11), lorsque la température locale mesurée au niveau dudit au moins un élément (5) ou groupement (5') d'éléments échangeur(s) de chaleur est supérieure à une valeur seuil supérieure ou de consigne préréglée, éventuellement ajustable par l'utilisateur.

5. Installation selon l'une quelconque des revendications 1 à 4, **caractérisée en ce que** le circuit (2) de circulation comporte une portion (2"") en dérivation alimentant un serpentin (23) situé dans un ballon alimentant un circuit de distribution d'eau chaude.

6. Installation selon l'une quelconque des revendications 1 à 4, **caractérisée en ce qu'**un serpentin (24) faisant partie d'un circuit de distribution d'eau chaude est monté dans le réservoir tampon (11).

7. Installation selon l'une quelconque des revendications 1 à 6, **caractérisée en ce que** les éléments (5) échangeurs de chaleur sont regroupés en radiateurs (5') d'au moins deux éléments reliés entre eux en parties haute et basse, chaque corps creux (12) présentant une structure profilée creuse à section en forme de I, de II, de III ou annulaire, de manière à former des cheminées de convection entre et/ou dans lesdits éléments (5), ces derniers étant munis d'ailettes longitudinales (17) montées ou formées intégralement au niveau de leurs faces latérales non apparentes, l'organe chauffant électrique (13), éventuellement commun à tous les éléments (5) d'un groupement (5'), étant soit également pourvu d'ailettes (17') de dissipation calorique sur sa (ses) face(s) qui ne sont pas en contact avec le corps creux (12) de l'élément (5) associé, soit isolé thermiquement par rapport à l'extérieur au niveau de cette ou ces face(s).

8. Installation selon l'une quelconque des revendications 1 à 7, **caractérisée en ce que** le dispositif (3) de chauffage à énergie renouvelable consiste en au moins une unité de panneau ou capteur solaire (4), comprenant chacun des tubes plats (4') parallèles et profilés, de faible épaisseur et à grande surface exposée, reliés fluidiquement entre eux et éventuellement compartimentés chacun en plusieurs canaux longitudinaux (4") de circulation de fluide caloporteur, ces derniers étant le cas échéant pourvus d'ailettes ou de nervures échangeuses (4"') internes et/ou externes profilées dans la direction longitudinale desdits canaux (4") et tubes (4'), et **en ce que** le fluide caloporteur est de l'eau, préférentiellement de l'eau additionnée de glycol.

9. Installation selon la revendication 8, **caractérisée en ce que** les tubes plats (4') constituant ladite au moins une unité de panneau solaire (4) comportent chacun une paroi latérale (25) qui présente en section transversale une forme en trapèze avec une face extérieure (26) lisse et une face intérieure (26') nervurée dans la direction d'extension longitudinale du tube (4') profilé considéré, lesdits tubes plats (4') étant pourvus à chacune de leurs extrémités longitudinales d'un tube collecteur (27) fermant l'extrémité concernée, pourvue d'ailettes (27') engagées par emboîtement ajusté dans lesdits tubes plats (4') et munis d'ouvertures (27") de communication avec les volumes intérieurs de ces derniers.

10. Procédé de commande d'une installation de chauffage selon l'une quelconque des revendications 1 à 9, **caractérisé en ce qu'**il consiste, en cas de demande de chauffage, dans au moins un local ou une pièce recevant au moins un élément échangeur de chaleur (5) ou au moins un groupement (5') de tels éléments, à autoriser une circulation du fluide caloporteur à travers la totalité du circuit (2) lorsque la température relevée à la sortie du dispositif (3) de chauffage à énergie renouvelable est supérieure à une première valeur seuil inférieure préréglée, par exemple 40 °C, à arrêter la circulation de fluide caloporteur à travers le dispositif (3) de chauffage à énergie renouvelable et à autoriser une circulation limitée entre le réservoir tampon (11) et les éléments (5) échangeurs de chaleur lorsque la température relevée à la sortie du dispositif (3) de chauffage à énergie renouvelable est inférieure ou égale à la première valeur seuil inférieure et que la température relevée dans le réservoir tampon (11) est supérieure à une seconde valeur seuil inférieure, par exemple 40 °C, et, enfin, à arrêter toute circulation forcée de fluide caloporteur dans le circuit de circulation (2) lorsque les deux températures relevées précitées sont inférieures ou égales aux valeurs seuil inférieures respectives et à alimenter l'organe ou les organes chauffant(s) électrique(s) (13) du ou des groupement(s) (5') d'éléments (5) échangeurs de chaleur pendant une durée ou des périodes, et le cas échéant avec une intensité, fonction du différentiel de température entre, d'une part, la valeur mesurée par l'organe (14) de mesure de la température locale associé à chaque groupement (5') ou à chaque local ou pièce recevant au moins un tel groupement (5') et, d'autre part, une valeur de consigne de température fixée pour ledit ou chaque groupement (5') ou pour ledit local ou ladite pièce considéré(e).

11. Procédé selon la revendication 10, **caractérisé en ce qu'**il consiste à arrêter la circulation de fluide caloporteur à travers les ou certains éléments (5) ou groupements (5') d'éléments échangeurs de chaleur et à autoriser une circulation limitée entre le dispositif (3) de chauffage à énergie renouvelable et le réservoir tampon (11), lorsque la température locale mesurée au niveau des ou du groupement(s) (5') d'éléments (5) échangeurs de chaleur considéré(s) est supérieure à une valeur seuil supérieure ou de consigné préréglée, éventuellement ajustée par l'utilisateur.
